# EUROPEAN PATENT SPECIFICATION

(11) **EP 2 900 083 B1**
(45) Date of publication and mention of the grant of the patent: **19.10.2016**
(21) Application number: 14714332.5
(22) Date of filing: 07.02.2014
(51) Int. Cl.: A23L 7/109, A21C 9/06

(54) **FILLED FOOD PRODUCT AND METHOD OF PRODUCING SUCH FOOD PRODUCT**
GEFÜLLTES NAHRUNGSPRODUKT UND VERFAHREN ZUR HERSTELLUNG SOLCH EINES LEBENSMITTELMITTELPRODUKTS
PRODUIT ALIMENTAIRE REMPLI ET PROCÉDÉ DE PRODUCTION D'UN TEL PRODUIT ALIMENTAIRE

(30) Priority: 07.02.2013 IT VI20130024
(43) Date of publication of application: 05.08.2015
(73) Proprietor: BERTAGNI 1882 S.p.A., 36057 Arcugnano (VI) (IT)
(72) Inventor: BOLLA, Enrico, I-37023 Grezzana (VR) (IT)
(74) Representative: Maroscia, Antonio
(86) International application number: PCT/IB2014/058847
(87) International publication number: WO 2014/122611

(56) References cited:
- WO-A1-02/01966
- WO-A1-2011/117641
- US-A- 4 711 165
- US-A- 4 748 031
- US-A- 5 914 140
- US-A1- 2006 121 169

## Description

### Field of the Invention

The present invention generally finds application in the field of food products and particularly relates to a filled food product, such as Italian dumplings known as ravioli, cappelletti, tortelli, panzerotti and the like.

The invention also relates to a method of producing filled food products as mentioned above.

### Background art

Food products are known in the art, which comprise an envelope of pasta enclosing a filling therein.

These products are typical products of Italian gastronomy and the filling may be made of several types of ingredients such as, for instance, meat, fish, cereals, vegetables, cheese, protein- or fat-based substances or the like.

According to their shapes, these filled food products are known as ravioli, tortellini, cappelletti, panzerotti, although many other shapes exist for filled food products from regional Italian and foreign gastronomic traditions.

Generally, the filling is laid on a sheet of dough, which is later closed on itself or with another sheet to cover and wrap the filling.

Filled food products are known, which have a filling made of predetermined doses of first and second food components in a raw or cooked state.

Particularly, the recipes of certain types of filled products require the two food components of the filling to be separate and not mix together during filling. This will provide filled food products prepared in strict compliance with the original recipes, and will allow the consumer to appreciate the taste obtained by the combination of the individual tastes of each food component in the filling.

One example of these food products is disclosed in EP 475 911, which comprises an envelope made of two distinct pockets or shells enclosing differentiated components or ingredients, and thus designed to remain separate and not contact each other.

One drawback of these known products is that they are actually formed of two ravioli of different tastes, whereby they cannot be tasted at the same time, unless they are joined and ingested together. Nevertheless, in this case the amount of pasta increases and at least partially dilutes the tastes of the individual ingredients, in addition to increasing the percentage of carbohydrates relative to proteins.

A further example of food products having multiple fillings is disclosed in WO2011/117641, which describes a savory food product composed of an envelope or outer tubular body made of pasta dough with one or more channels in which different food substances are held. The method of making the product, e.g. in the form of a sausage roll, comprises coextruding the body made of pasta with a sauce and with minced meat disposed in respective concentric or radially staggered channels.

In this product fresh pasta cannot be used for the body, and the components of the fillings must undergo a thermal cooking treatment before being extruded into their respective channels.

Furthermore, the method only provides cylindrical envelopes and fillings, in which the first and second components are disposed in respective coaxial or parallel channels. In practice, the product is tasted in sliced form, and resembles more a sausage than a pasta product.

US2012/0121169, on which is based the preamble of the attached claim 1, discloses an artistic pasta generally shaped as ravioli comprising one upper carrier layer made of multi-colored and multi-layered pasta dough and a lower layer joint to the upper carrier layer along a peripheral edge to form a closed envelope which encloses a filling. The filling is made of a plurality of ingredients or combination of ingredients but is unitary and with no multiple dose so that the taste and flavor cannot be variegated.

US 4 711 165 discloses a precooked lasagna designed to be frozen and formed by a pasta mixture of semolina and egg which is extruded to form noodles or strips with scalloped edges. A filler is deposited between the various noodles and the strips are superimposed to form a lasagna sandwich which can be folded to assume an "e" section. Nevertheless the noodles are not joined together but leave the scalloped edges open so that the sauce can migrate between the strips despite the filler. The filler can have any composition but is of a single type thus reducing the choice and taste of the precooked lasagna.

### Disclosure of the invention

The object of the present invention is to overcome the above mentioned drawbacks, by providing a filled food product that has a high organoleptic value and is relatively cost-effective.

A particular object of the present invention is to provide a filled food product that can be covered with any kind of pasta.

A further object of the present invention is to provide a filled food product that affords the provision of instant-made food products, while maintaining strict compliance with the original handicraft methods.

Yet another object of the present invention is to provide a filled food product that allows the filling components to be distributed in different positions, according to a wide variety of shapes and types of products.

These and other objects, as better explained hereafter, are fulfilled by a filled food product as defined in claim 1.

With these characteristics, the food product of the invention will afford the provision of filled products with fresh pasta envelopes, whose filling is composed of multiple food ingredients introduced into the same envelope of traditional, home-made form.

In a further aspect, the invention relates to a method of producing the food product, as defined in claim 4.

Advantageous embodiments of the invention are defined in accordance with the dependent claims.

### Brief Description of the Drawings

Further features and advantages of the invention will be more apparent from the detailed description of a preferred, non-exclusive embodiment of a composite food product with double filling, which is described as a non-limiting example with the help of the annexed drawings, in which:
FIGS. 1A and 1B are lateral sectional views of a composite food product with double filling according to the invention;

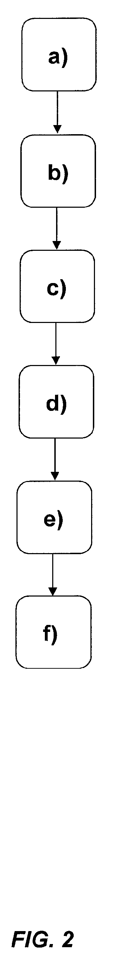

FIG. 2 is a block diagram of the method of making the product of Fig. 1;
FIG. 3 is a schematic perspective view of a first embodiment of the method of the invention;
FIG. 4 is a schematic perspective view of a second embodiment of the method of the invention.

### Detailed description of a preferred embodiment

The accompanying figures show a composite food product with double filling, generally designated by numeral 1, which is mainly designed for preparation of dishes of high gastronomic quality.

Particularly, the food product 1 of the invention may be one of the Italian dumplings known as ravioli, panzerotti, tortelli, cappelletti or the lile and may be designed to be eaten either raw and cooked.

If the product 1 is intended for cooking, it may be namely designed to be either boiled, e.g. in water or broth or baked, cooked in a microwave oven or fried in oil.

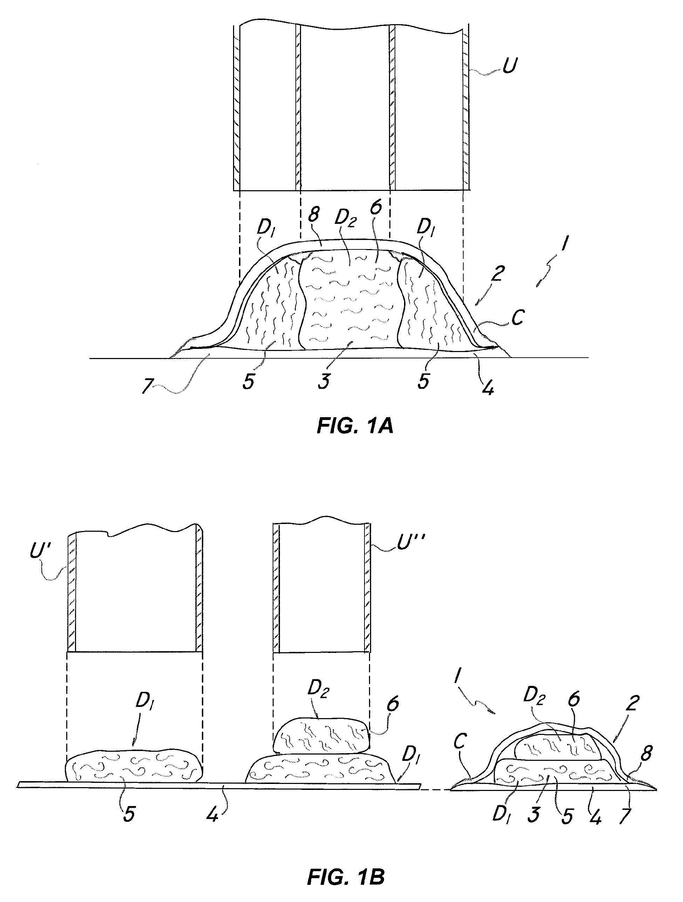

The composite food product, as best shown in FIGS. 1A and 1B essentially comprises an envelope 2 made of pasta, which encloses therein a filling 3 made of edible food raw materials.

For example, the envelope 2 may be formed from a sheet of pasta dough composed of soft-wheat flour, durum-wheat flour, eggs and possibly a very small amount of water. The sheet may have a thickness ranging from 0,5 to 2,5 mm, and preferably of about 1 mm.

The raw materials that form the filling may be selected from the group comprising, for example, meat, fish, eggs, cheese, cold cuts, vegetables, cereals, protein- and fat-based substances, flavors and spices, possibly added with seasonings, flavors and sauces, even though these cannot be easily combined according to traditional recipes.

The pasta envelope 2 may have a predetermined size and shape, allowing it to contain the filling 3, according to the particular type of food product 1 to be obtained.

According to a peculiar characteristic of the invention, the envelope 2 consists of at least one sheet 4 of fresh pasta and the filling 3 comprises at least one first dose D₁ of a first component 5 and at least one second dose D₂ of a second component 6 other than the first component. Particularly, the doses are distinct D₁, D₂, while being both enclosed within the same envelope 2.

The choice of fresh pasta and its base components shall allow the envelope 2 to optimally wrap the outer surface of the filling 3 with high surface adhesion, for almost perfect liquid tightness, even in boiling liquids, as required for cooking with no loss of filling 3. Furthermore, this will provide food products 1 with double filling having a characteristic taste, and faithfully reproducing the traditional regional gastronomy tastes.

Namely, the envelope 2 may be made up of a lower layer 7 and an upper layer 8 of fresh pasta, which are in mutually overlapped or juxtaposed relationship and are joined together along a substantially continuous peripheral edge C having a predetermined shape, in accordance with the type of desired product.

Conveniently, once the layers 7, 8 are joined along the peripheral edge C, the envelope 2 will be preferably substantially hermetic, i.e. substantially liquid-tight or upon boiling, such that it will not break during boiling and will not lose the filling 3.

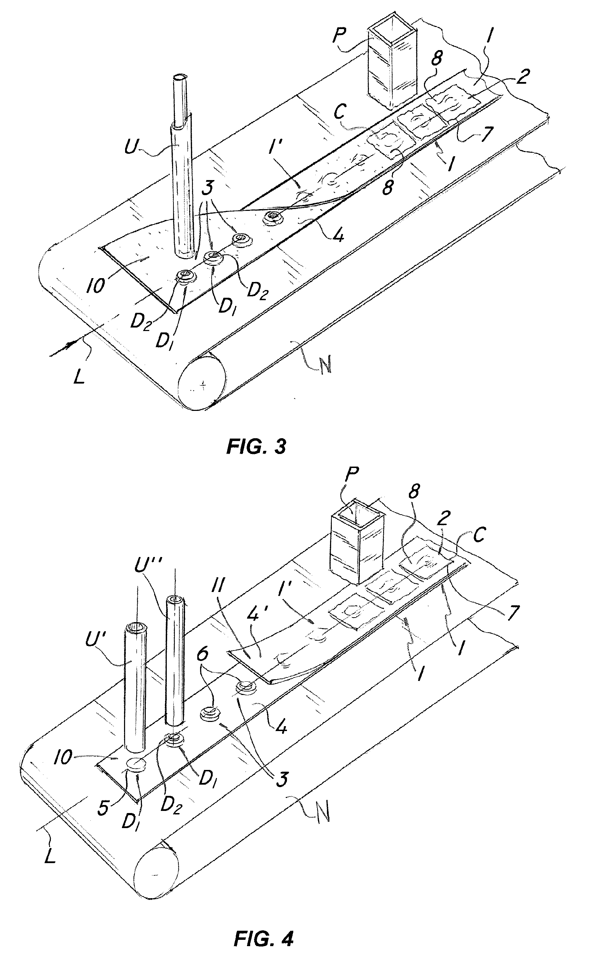

In a first embodiment of the envelope 2, as shown in FIG. 3, the layers 7, 8 may be formed from the same sheet 4 of fresh pasta, which is folded on itself along a longitudinal line L using a special ploughshare-shaped blade, not shown and known to the skilled person.

This embodiment is particularly suitable to make products 1 such as tortelli, cappelletti, panzerotti and the like.

As an alternative to this envelope 2, as shown in FIG. 4, the layers 7, 8 may consist of two distinct and separate sheets of fresh pasta 4, 4' in mutually overlapped relationship. This embodiment is particularly suitable to make products such as ravioli and panzerotti.

In a preferred embodiment, the doses D₁, D₂ may be arranged in substantially concentric relationship.

Particularly, the doses D₁, D₂ may be laid on the lower layer 7 in concentric arrangement.

Furthermore, the doses D₁, D₂ may be laid on the lower layer 7 substantially at the same time, by coextrusion, using a double-tube nozzle U, as shown in FIGS. 1A and 3.

Alternatively, the doses D₁, D₂ may be arranged in substantially coplanar relationship.

Particularly, the doses D₁, D₂ may be laid on the lower layer 7 at successive times, using single-tube nozzles U', U", although in substantially superimposed and substantially concentric positions 7, 8, as shown in FIGS. 1B and 4.

Once the doses D₁, D₂ have been laid on the lower layer 7, a portion of the sheet 4 may be folded thereon along the line L, or a second sheet 4' may be laid thereon, to form the upper layer 8 and define a semifinished product 1'.

Finally, the semifinished product 1' may be cut to size using a forming and cutting tool P, such that the layers 7, 8 will be joined along a peripheral edge C and cut thereat to form a finished product 1.

Thus, the finished product will be closed in perfectly liquid-tight fashion, at its peripheral edge C.

Preferably, the doses D₁, D₂ may have their respective components 5, 6 ranging from 5% to 95%, preferably from 10% to 90% by weight, based on the total weight of the filling 3.

In a further aspect, the invention relates to a method of making food products.

Particularly, the method comprises preparing an envelope 2 made of fresh pasta dough and introducing a filling 3 made of edible raw materials 5, 6 therein.

In a preferred embodiment, the method comprises a first step a) in which a lower layer of fresh pasta 7 is prepared.

In the next step b), a first filling component 5 and at least one second filling component 6, other than the first component 5, are prepared.

In the following step c), a first dose D₁ of the first component 5 and a second dose D₂ of the second component 6 are laid on the lower layer 7.

Conveniently, the method comprises a step d) in which an upper layer 8 of fresh pasta is prepared and laid over the lower layer 7 to cover the doses D₁, D₂.

In the next step e), the lower layer 7 and the upper layer 8 are joined along a substantially continuous peripheral edge C, whose shape matches the shape of the finished product 1 to form a filled semifinished product 1'.

In step f), the filled semifinished product 1' is cut along the edge C to form the finished food product 1.

Particularly, the semifinished product 1' may be cut proximate to the peripheral edge C to obtain a shape of the finished product 1 that is slightly different from that of the edge itself.

Conveniently, in step c), the doses are laid on the lower layer 7 at the same time, as shown in FIG. 3, or at successive times, as shown in FIG. 4.

Conveniently, the first component 5 and the second component 6 may be heated to a predetermined temperature Tᵣ substantially at the same time as they are laid on the lower layer 7.

The first dose D₁ and the second dose D₂, as best shown in FIG. 3, may be substantially concentric and laid by simultaneous coextrusion of the first component 5 and the second component 6.

Alternatively, the first dose and the second dose, as best shown in FIG. 3, may be substantially concentric and laid by coextruding one of the first component 5 and second component 6 later than the other of the second component 6 or the first component 5.

Conveniently, as best shown in FIG. 3, the lower layer 7 and the upper layer 8 may be obtained by folding a single sheet 4 of fresh pasta on itself.

Alternatively, as best shown in FIG. 4, the lower layer 7 and the upper layer 8 may be obtained from two distinct sheets 4, 4' of fresh pasta.

The two sheets 4, 4' may be in at least partially overlapped relationship. Particularly, the filling 3 may be laid on a sheet 4 of fresh pasta, whereas the other sheet 4' of fresh pasta may be laid at least partially over the first sheet 4 and totally over the filling 3.

Particularly, single-sheet food products 1 are made by forming the lower layer 7 and the upper layer 8 by folding a single sheet of fresh pasta 4 on itself.

Alternatively, double-sheet food products 1 are made by forming the lower layer 7 and the upper layer 8 by laying two distinct sheets of fresh pasta 4, 4' in overlapped relationship.

In a continuous process, the lower layer 8 and the upper layer 9 are both in the form of strips 10, 11, as shown in FIGS. 3 and 4, and are fed in a substantially longitudinal direction L. Each of the strips 10, 11 is fed in the direction L by a moving conveyor surface, such as a closed-loop belt conveyor N.

Conveniently, as shown in FIG. 3, the doses D₁, D₂ may be laid by simultaneous coextrusion of the first component 5 and the second component 6 on one of the strips 10 in predetermined positions along the longitudinal extent thereof, and may be later covered by the other strip 11.

Furthermore, as shown in FIG. 4, a dose D₁ may be laid on one of the strips 10 in a predetermined position and the other dose D₂ is laid above the dose D₁ in a substantially concentric position.

The latter dose may be laid later than the dose D₁ laid on the strip 10.

The overlapped doses D₁, D₂, as shown in FIG. 4, may be later covered by the other strip 11.

The above disclosure clearly shows that the composite food product with double filling and the method of the invention fulfill the intended objects and particularly meet the requirement of providing a filled food product comprising at least one sheet of fresh pasta and having a high organoleptic value.

The filled food product and method of the invention are susceptible to a number of changes or variants, within the inventive concept disclosed in the annexed claims.

## Claims

1. A filled food product obtained by the process of claim 4, such as Italian dumplings known as ravioli, cappelletti, tortelli, panzerotti and the like, comprising an envelope (2) made of a lower layer (7) and an upper layer (8) of pasta, said layers (7, 8) being in mutually facing relationship and joined together along a substantially continuous peripheral edge (C) having a predetermined shape, said envelope (2) being closed along said peripheral edge (C) in substantially liquid-tight fashion or upon boiling, said envelope (2) enclosing a filling (3) made of edible raw materials selected from the group comprising meat, fish, eggs, cheese, cold cuts, vegetables, cereals, protein- and fat-based substances or combinations thereof, possibly added with seasonings, flavors and sauces, **characterized in that** each of said upper and lower layers (7, 8) is a single-layer of fresh pasta dough of predetermined thickness, said filling (3) comprising at least one first dose (D₁) of a first component (5) and at least one second dose (D₂) of a second component (6) other than said first component, said at least one first and second doses (D₁, D₂) being distinct and both enclosed within said closed envelope (2) between said lower and said upper layers (7, 8).

2. A product as claimed in claim 1, wherein said at least one first and second doses (D₁, D₂) are arranged over said lower layer (7) respectively in a substantially concentric, overlapped or coplanar relationship.

3. A product as claimed in claim 1, wherein the doses (D₁, D₂) have their respective components (5, 6) ranging from 5% to 95%, preferably from 10% to 90% by weight, based on the total weight of the filling (3).

4. A method of making filled food products (1), such as Italian dumplings known as ravioli, cappelletti, tortelli, panzerotti and the like, which comprises preparing an envelope (2) made of fresh pasta and introducing therein a filling (3) made of edible raw materials, wherein the method comprises the steps of:
a) preparing a lower layer (7) of fresh pasta extending in a substantially horizontal plane;
b) preparing a first filling component (5) and at least one second filling component (6) other than the first component (5), wherein each of said components (5, 6) is selected from the group comprising meat, fish, eggs, cheese, cold cuts, vegetables, cereals, protein- or fat-based substances or combinations thereof, possibly added with seasonings, flavors and sauces and without the addition of pasta;
c) laying a first dose (D₁) of said first component (5) in a substantially vertical direction and laying a second dose (D₂) of said second component on said lower layer (7) in the same substantially vertical direction;
d) preparing an upper layer (8) of fresh pasta and laying it over said lower layer (7) to cover said doses (D₁, D₂);
e) joining said lower and upper layers (7, 8) along a substantially continuous peripheral edge (C) which matches the shape of the finished product (1) to form a filled semifinished product (1') with an envelope (2) which is closed in substantially liquid-tight fashion or upon boiling;
f) cutting said filled semifinished product (1') along said edge (C) to form the finished food product (1);
**characterized in that** said upper and lower layers (7, 8) are made of single-layers of fresh pasta dough of predetermined thickness, said doses (D₁, D₂) being both laid on said lower layer (7) within said closed envelope (2) and being covered with said upper layer (8), each of said doses (D₁, D₂) being coextruded in substantially concentric relationship at the same time, respectively extruded in substantially overlapped or coplanar relationship at successive times.

5. Method as claimed in claim 4, wherein said lower layer (7) and said upper layer (8) are single layers each obtained from the same sheet (4) of fresh pasta folded on itself.

6. Method as claimed in claim 4, wherein said lower layer (7) and said upper layer (8) are single layers each obtained from two distinct sheets (4, 4') of fresh pasta folded on itself.

7. Method as claimed in claim 4, wherein said lower layer (7) and said upper layer (8) are both in the form of strips (10, 11) and are fed in a substantially longitudinal direction.

8. Method as claimed in claim 4, wherein said doses (D₁, D₂) are laid by simultaneous coextrusion of said components (5, 6) on one (10) of said strips in predetermined positions along the longitudinal extent thereof, and are later covered by the other (11) of said strips.

9. Method as claimed in claim 4, wherein one of said doses (D₁) is laid on one (10) of said strips in a predetermined position, the other of said doses (D₂) being laid in substantially superimposed and concentric relationship to said one dose (D₁) at a later time, said mutually overlapping doses (D₁, D₂) being later covered by the other (11) of said strips.

## Patentansprüche

1. Ein gefülltes Nahrungsmittel, das hergestellt ist gemäß dem Verfahren von Anspruch 4, wie zum Beispiel italienische Knödel, die bekannt sind als Ravioli, Capelletti, Tortelli, Panzerotti und ähnliche mit einer Ummantelung (2), die hergestellt ist aus einer unteren Schicht (7) und einer oberen Schicht (8) aus Teig, wobei diese Schichten (7, 8) in einer sich gegenseitig gegenüber liegenden Beziehung sind und miteinander verbunden sind entlang einer im Wesentlichen durchgehenden äußeren Kante (C) mit einer vorbestimmten Form, wobei diese Ummantelung (2) geschlossen ist entlang der äußeren Kante (C) auf eine im Wesentlichen flüssigkeitsdichte Art oder auf Kochen, wobei die Ummantelung (2) eine Füllung (3) einschließt, die hergestellt ist aus essbaren, rohen Materialien, die ausgewählt sind aus der Gruppe, die Fleisch, Fisch, Eier, Käse, Aufschnitt, Gemüse, Weizen, protein- und fettbasierte Stoffe oder Zusammensetzungen davon enthält, denen möglicherweise Gewürze, Aroma und Soßen zugesetzt sind, **dadurch gekennzeichnet, dass** jede der oberen und unteren Schichten (7, 8) eine einzelne Schicht ist aus frischem Pastateig mit vorbestimmter Dicke, wobei die Füllung (3) mindestens eine erste Menge (D₁) eines ersten Teils (5) und mindestens eine zweite Menge (D₂) eines zweiten Teils (6), das verschieden ist von dem ersten Teil, wobei die mindestens einen ersten und zweiten Mengen (D₁, D₂) sich unterscheiden und beide eingeschlossen sind innerhalb der geschlossenen Ummantelung (2) zwischen den unteren und oberen Schichten (7, 8).

2. Ein Mittel gemäß Anspruch 1, **dadurch gekennzeichnet, dass** die mindestens einen ersten und zweiten Mengen (D₁, D₂) über der unteren Schicht (7) angeordnet sind, jeweils in einer im Wesentlichen konzentrischen, überlappenden oder koplanaren Beziehung.

3. Ein Mittel gemäß Anspruch 1, **dadurch gekennzeichnet, dass** die Mengen (D₁, D₂) ihre jeweiligen Teile (5, 6) in einem Bereich von 5% bis 95% haben, vorzugsweise von 10% bis 90% -Masse, mit Bezug auf das Gesamtgewicht der Füllung (3).

4. Ein Verfahren zur Herstellung gefüllter Nahrungsmittel (1), wie zum Beispiel italienische Knödel, die bekannt sind als Ravioli, Capelletti, Tortelli, Panzerotti und ähnliche, das das Zubereiten einer Ummantelung (2) einschließt, die hergestellt ist aus einem frischen Teig und Einführen darin eine Füllung (3), die hergestellt ist aus essbaren, rohen Materialien, wobei das Verfahren die Schritte umfasst:
a) Zubereiten einer unteren Schicht (7) aus frischem Teig, sich in einer im Wesentlichen horizontalen Ebene erstreckt,
b) Zubereiten eines ersten Füllungs-Teils (5) und mindestens eines zweiten Füllungs-Teils (6), das anders ist als das erste Teil (5), wobei jedes der Teile (5, 6) ausgewählt ist aus der Gruppe, die Fleisch, Fisch, Eier, Käse, Aufschnitt, Gemüse, Weizen, protein- und fettbasierte Stoffe oder Zusammensetzungen davon enthält, denen möglicherweise Gewürze, Aroma und Soßen zugesetzt sind und ohne die Zugabe von Teig,
c) Legen einer ersten Menge (D₁) des ersten Teils (5) in eine im Wesentlichen vertikale Richtung und legen einer zweiten Menge (D₂) des zweiten Teils auf die untere Schicht (7) in die selbe im Wesentlichen vertikale Richtung,
d) Zubereiten einer oberen Schicht (8) aus frischem Teig und legen über die untere Schicht (7), um die Mengen (D₁, D₂) zu bedecken,
e) Verbinden der unteren und oberen Schichten (7, 8) entlang einer im Wesentlichen durchgehenden äußeren Kante (C), die an die Form des fertigen Mittels (1) angepasst ist, um ein gefülltes halbfertiges Mittel (1') zu bilden mit einer Ummantelung (2), die geschlossen ist auf eine im Wesentlichen flüssigkeitsdichte Art oder auf Kochen,
f) Schneiden des gefüllten halbfertigen Mittels (1') entlang der Kante (C), um das fertige Nahrungsmittel (1) zu bilden,
**dadurch gekennzeichnet, dass** die oberen und unteren Schichten (7, 8) hergestellt sind aus einzelnen Schichten aus frischem Pastateig mit vorbestimmter Dicke, wobei die Mengen (D₁, D₂) beide auf die untere Schicht (7) gelegt werden innerhalb der geschlossenen Ummantelung (2) und bedeckt werden mit der oberen Schicht (8) und jede der Mengen (D₁, D₂) koextrudiert werden in im Wesentlichen konzentrischer Beziehung zur selben Zeit, beziehungsweise extrudiert werden in im Wesentlichen überlappender oder koplanarer Beziehung in aufeinander folgenden Zeiten.

5. Verfahren gemäß Anspruch 4, **dadurch gekennzeichnet, dass** die untere Schicht (7) und die obere Schicht (8) einzelne Schichten sind, die jede erhalten werden von der selben Lage (4) aus frischem Teig, die auf sich selbst gefaltet wird.

6. Verfahren gemäß Anspruch 4, **dadurch gekennzeichnet, dass** die untere Schicht (7) und die obere Schicht (8) einzelne Schichten sind, die jede erhalten werden von zwei unterschiedlichen Lagen (4, 4') aus frischem Teig, die auf sich selbst gefaltet werden.

7. Verfahren gemäß Anspruch 4, **dadurch gekennzeichnet, dass** die untere Schicht (7) und die obere Schicht (8) beide in der Form von Streifen (10, 11) sind und in einer im Wesentlichen longitudinalen Richtung zugeführt werden.

8. Verfahren gemäß Anspruch 4, **dadurch gekennzeichnet, dass** die Mengen (D₁, D₂) gelegt werden mittels gleichzeitiger Ko-Extrusion der Teile (5, 6) auf einen der Streifen (10) in vorbestimmten Positionen entlang deren longitudinaler Erstreckung und später bedeckt werden von dem anderen der Streifen (11).

9. Verfahren gemäß Anspruch 4, **dadurch gekennzeichnet, dass** eine der Mengen (D₁) gelegt wird auf einen der Streifen (10) in eine vorbestimmte Position, die andere Menge (D₂) gelegt wird in im Wesentlichen überlagerter und konzentrischer Beziehung zu der einen Menge (D₁) zu einer späteren Zeit, wobei die sich gegenseitig überlappenden Mengen (D₁, D₂) später bedeckt werden von dem anderen der Streifen (11).

## Revendications

1. Produit alimentaire farci obtenu par le procédé selon la revendication 4, tel que des boulettes italiennes connues sous le nom de ravioli, cappelletti, tortelli, panzerotti et analogues, comprenant une enveloppe (2) faite d'une couche inférieure (7) et d'une couche supérieure (9) de pâte, lesdites couches (7, 8) se faisant mutuellement face et étant reliées ensemble le long d'un bord périphérique sensiblement continu (C) ayant une forme prédéterminée, ladite enveloppe (2) étant fermée le long dudit bord périphérique (C) de façon sensiblement étanche aux liquides ou pendant l'ébullition, ladite enveloppe (2) renfermant une farce (3) faite de matières premières comestibles, choisies dans le groupe comprenant viande, poisson, oeufs, fromage, charcuterie, légumes, céréales, substances à base protéique ou grasse ou combinaisons de ceux-ci, éventuellement avec l'ajout d'assaisonnement, arômes et sauces, **caractérisé en ce que** chacune desdites couches supérieure et inférieure (7, 8) est une couche unique de pâte fraîche ayant une épaisseur prédéterminée, ladite farce (3) comprenant au moins une première dose (D₁) d'un premier composant (5) et au moins une seconde dose (D₂) d'un second composant (6) différent dudit premier composant, lesdites au moins une première dose et une seconde dose (D₁, D₂) étant distinctes et toutes les deux enfermées à l'intérieur de ladite enveloppe fermée (2) entre ladite couche inférieure et ladite couche supérieure (7, 8).

2. Produit selon la revendication 1, dans lequel lesdites au moins une première et une seconde doses (D₁, D₂) sont agencés au-dessus de ladite couche inférieure (7), respectivement de façon sensiblement concentrique, superposée ou coplanaire.

3. Produit selon la revendication 1, dans lequel les doses (D₁, D₂) comprennent leurs composants (5, 6) respectifs en quantité comprise entre 5% et 95%, de préférence entre 10% et 90% en poids, par rapport au poids total de la farce (3).

4. Procédé pour la réalisation de produits alimentaires farcis (1), tel que des boulettes italiennes connues sous le nom de ravioli, cappelletti, tortelli, panzerotti et analogues, comprenant la préparation d'une enveloppe (2) faite de pâte fraîche et l'introduction d'une farce (3) faite de matières premières comestibles dans celle-ci, dans lequel le procédé comprend les étapes suivantes :
a) préparer une couche inférieure (7) de pâte fraîche s'étendant sur un plan sensiblement horizontal ;
b) préparer un premier composant de farce (5) et au moins un second composant de farce (6) différent du premier composant (5), dans lequel chacun desdits composants (5, 6) est choisi dans le groupe comprenant viande, poisson, oeufs, fromage, charcuterie, légumes, céréales, substances à base protéique ou grasse ou combinaisons de ceux-ci, éventuellement avec l'ajout d'assaisonnement, arômes et sauces, et sans ajout de pâte ;
c) déposer une première dose (D₁) dudit premier composant (5) dans une direction sensiblement verticale et déposer une seconde dose (D₂) dudit second composant sur ladite couche inférieure (7) dans la même direction sensiblement verticale ;
d) préparer une couche supérieure (8) de pâte fraîche et la déposer sur ladite couche inférieure (7) pour couvrir lesdites doses (D₁, D₂) ;
e) relier lesdites couches inférieure et supérieure (7, 8) le long d'un bord périphérique sensiblement continu (C) ayant la forme du produit fini (1) pour former un produit semi-fini (1') avec une enveloppe (2) fermée de façon sensiblement étanche aux liquides ou pendant l'ébullition ;
f) couper ledit produit semi-fini (1') le long dudit bord (C) pour former le produit alimentaire fini (1) ;
**caractérisé en ce que** lesdites couches supérieure et inférieure (7, 8) sont faites de couches uniques de pâte fraîche ayant une épaisseur prédéterminée, lesdites doses (D₁, D₂) étant toutes les deux déposées sur ladite couche inférieure (7) à l'intérieur de ladite enveloppe fermée (2) et étant couvertes avec ladite couche supérieure (8), chacune desdites doses (D₁, D₂) étant co-extrudée de façon sensiblement concentrique et en même temps, ou extrudée respectivement de façon sensiblement superposée ou coplanaire à des instants successifs.

5. Procédé selon la revendication 4, dans lequel ladite couche inférieure (7) et ladite couche supérieure (8) sont des couches uniques, chacune desquelles est obtenue de la même feuille (4) de pâte fraîche repliée sur elle-même.

6. Procédé selon la revendication 4, dans lequel ladite couche inférieure (7) et ladite couche supérieure (8) sont des couches uniques, chacune desquelles est obtenue de deux feuilles distinctes (4, 4') de pâte fraîche repliée sur elle-même.

7. Procédé selon la revendication 4, dans lequel ladite couche inférieure (7) et ladite couche supérieure (8) sont toutes les deux en forme de bandes (10, 11) et sont alimentées dans une direction sensiblement longitudinale.

8. Procédé selon la revendication 4, dans lequel lesdites doses (D₁, D₂) sont déposés par co-extrusion contemporaine desdits composants (5, 6) sur l'une (10) desdites bandes en positions prédéterminées sur l'étendue longitudinale de celle-ci, et sont en suite couvertes par l'autre (11) desdites bandes.

9. Procédé selon la revendication 4, dans lequel l'une desdites doses (D₁) est déposée sur l'une(10) desdites bandes dans une position prédéterminée, l'autre desdites doses (D₂) étant déposée de façon sensiblement superposée et concentrique par rapport à ladite une dose (D₁) à un instant successif, lesdites doses mutuellement superposées (D₁, D₂) étant par la suite couvertes par l'autre (11) desdites bandes.
